# EUROPEAN PATENT APPLICATION

(11) **EP 2 543 338 A1**
(43) Date of publication of application: **09.01.2013**
(21) Application number: 12171821.7
(22) Date of filing: 13.06.2012
(51) Int. Cl.: A61C 13/00, A61C 8/00

(54) **Angled prosthetic abutment**

(30) Priority: 07.07.2011 ES 201130735 U
(71) Applicant: Terrats Mecanizados S.L., 08110 Montcada I Reixac (ES)
(72) Inventor: Terrats Triquell, Ramon, 08110 MONTCADA I REIXAC (ES)
(74) Representative: Isern-Jara, Nuria

(57) **Abstract**

Angled prosthetic (1) abutment, that comprises a cylindrical portion (2) arranged according to a main axis (E) of the abutment (1), which has a connecting means (3) at its lower end, which is suitable for affixing to a dental implant, and a machinable portion (4) with a substantially conical sector cut by two planes (P) running parallel to the main axis (E) and substantially tangential to the cylindrical portion (2).

## Description

### OBJECT OF THE INVENTION

This invention relates to an angled abutment for affixing dental prostheses where the tilt angle can be set quickly and easily.

### BACKGROUND OF THE INVENTION

Currently, there are known implants for replacing dental pieces in a patient's mouth, that replace the root of the missing dental piece and consisting essentially of a metal piece embedded into a patient's jawbone. In the majority of cases, the dental implant includes a threaded bore to receive a prosthetic abutment or stump connecting screw, which the prosthesis that replaces the missing dental piece is fixed to. In other words, the prosthetic abutment constitutes the core of the prosthetic device.

Currently, two groups of prosthetic abutments are known and widely used based on their shape: straight abutments and angled abutments. Straight abutments are cylindrical in shape with a single axis of revolution coincident with the axis of the dental implant. However, due to errors when fitting, as a result of maxillary bone morphological constraints or other reasons, it is sometimes necessary to attach the prosthesis at an angle to the axis of the implant. In such cases angled abutments are used, having a first main axis of revolution coinciding with the axis of the implant to which it is fixed, and a second axis which constitutes the stump or core which the prosthesis will be fixed to. This second axis is angularly tilted with respect to the first, from a few degrees to 30 degrees or more.

Currently, there are a number of alternatives on the market, made by the same brands that make the implants and made by other manufacturers of material that can be adapted to the original brands. The criterion for choosing these pieces is primarily to identify and locate the angled abutment that is available on the market whose stump has an angulation that best fits each specific need. Thus, for a particular connection that ideally requires an angle of 21°, for example, abutments with a tilt of only 15° or 25° might be sourced.

Note that for a given angled abutment to be compatible with a particular application, the orientation of the stump around the main axis of the implant must match, i.e. it is necessary to adjust two angles: the "angulation", which refers to the tilt of the stump with respect to the main axis of the abutment and the "orientation", which refers to the orientation of the stump around the main axis of the implant.

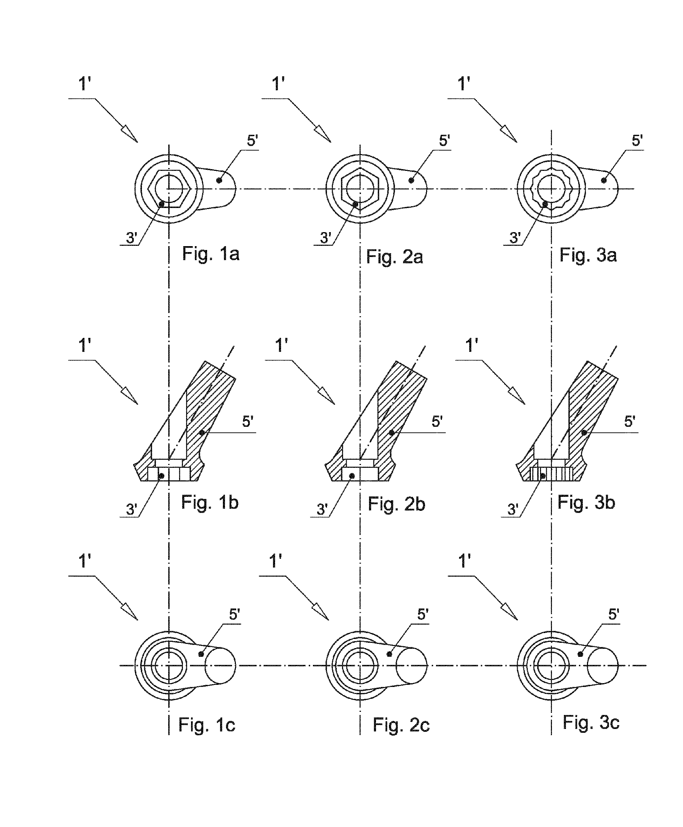

Figures 1-3 show three examples of angled abutments according to the prior art showing these aspects and in which the meaning of the terms "angulation" and "orientation" can be clearly seen. Figures 1 and 2 show angled abutments fitted with connecting means with the same hexagonal shape but with different relative orientation: the column in figure 1 is oriented according to a vertex of the hexagon, whereas figure 2 is oriented according to one side of the hexagon. In both cases, depending on the position the connecting means is fitted to the implant, the orientation of the stump will change to 60° angles as it is a hexagon. The fixing means could also have a polygonal shape with twice the number of sides as the figure shown by the implant connection, as seen in figure 3. The difference between the possible positions is then reduced to a 30° angle. There are other possibilities such as an octagon shape or other shapes. In addition, angulation is set at approximately 30° in all these figures.

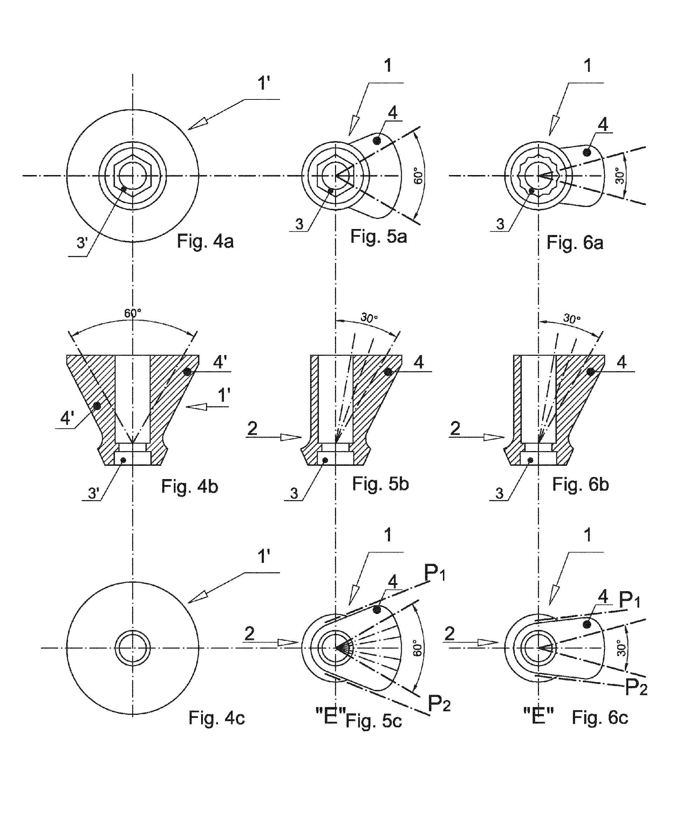

In short, since it is difficult to find an abutment on the market whose options in respect of angulation and orientation are suitable for solving a specific problem, it is common practice to machine the abutment that is closest to the ideal angle in the prosthetic workshop. In this respect, the solid, one-piece or block abutments are also known on the market, where the stump has a conical shape with an opening angle of about 30° and whose axis of revolution is the main axis of the abutment. An example of such abutments is shown in figure 4. It can be easily deduced that by using this configuration a stump that has both the desired angulation and orientation can be obtained by machining. In exchange, there is a vast amount of excess material, requiring a long and tedious machining process.

### DESCRIPTION OF THE INVENTION

In view of the above, machining of the angled abutment's stump is, in practice, inevitable. This invention describes an angled abutment for obtaining a stump with optimum angulation and orientation, while minimizing the amount of material extracted. In particular, the amount of material extracted is far less than the one-piece or solid abutments known in the art.

The angled prosthetic abutment of the invention essentially comprises two parts:
- a cylindrical portion arranged according to a main axis of the abutment and which has male/female connecting means at its lower end which is suitable for affixing to a dental implant and
- a machinable portion with a substantially conical sector cut by two planes running parallel to the main axis of the abutment and substantially tangential to the cylindrical portion, which allows the dental technician to adequately adapt the stump to their needs in terms of angulation and orientation.

Thus, unlike the known solid abutments, the machinable portion of the abutment of the invention is much smaller in volume, while offering all the options in respect of angulation and orientation. Specifically, the machinable portion of the invention has a substantially conical-shaped sector cut by two planes running parallel to the main axis of the abutment and substantially tangential to the cylindrical portion. The angle formed by these two planes is chosen depending on the shape of the connecting means with the implant such that all options both in terms of angulation and orientation are available. The geometry of this abutment is more clearly understood from the figures outlined hereinafter in this document.

Note that in this document, the connecting means between the abutment and the dental implant can be female (an orifice), as depicted in the figures, or male (a protrusion). In this case, the prosthetic abutment would have a protrusion in a hexagonal, octagonal shape etc., while the implant would have an orifice with a complementary shape. The term "connecting means" refers to both.

According to other preferred embodiments of the invention, the abutment is made of titanium, chromium, nickel, cobalt, gold or alloys comprising one of the aforementioned elements.

### BRIEF DESCRIPTION OF THE FIGURES:

Figures 1a, 1b and 1c show an example of an abutment according to the prior art.
Figures 2a, 2b and 2c show another example of an abutment according to the prior art.
Figures 3a, 3b and 3c show another example of an abutment according to the prior art.
Figures 4a, 4b and 4c show an example of a solid abutment according to the prior art.
Figures 5a, 5b and 5c show an example of an abutment according to the invention.
Figures 6a, 6b and 6c show another example of an abutment according to the invention.

### PREFERRED EMBODIMENT OF THE INVENTION

The ' sign is used in the figures to refer to parts of abutments of the prior art as shown in figures 1, 2, 3 and 4. Specifically, figures 1a, 1b and 1c show different views of an abutment (1') according to the prior art which has a hexagonal-shaped connecting (3') means, in this case a female connector, i.e. a connecting (3 ') orifice. In addition, the stump (5') is angled according to a vertex of the hexagon which constitutes the connecting (3') orifice. As a result of the connecting (3 ') orifice having a hexagonal shape, the abutment (1') can be affixed to an implant (not shown) in positions spaced 60° apart. Therefore, orientation of this abutment (1 ') is limited to six possible positions, with no option for intermediate positions. Figures 2a, 2b and 2c show another similar abutment (1'), although in this case the stump (5') is oriented according to one side of the hexagon. Orientation in this case is also limited to six possible positions, while differing from the previous case: there would be six intermediate positions between the possible abutment (1 ') positions in figure 1. In addition, figures 3a, 3b and 3c show a third known abutment (1') where the connecting (3') orifice, similar to a 12-sided polygon, is shaped such that it can be affixed to the implant in 12 different orientations.

In any of the cases outlined hereinabove, it is easy to see how the possibilities are limited both in terms of orientation and angulation: there are 6 or 12 possible orientations, while angulation in these examples is set at 30°.

Figures 4a, 4b and 4c show a solid or one-piece abutment (1') according to the prior art. As seen in the figures, the machinable portion (4') is conical and covers all possible orientations and a range of angulations from 0° to about 30°. This solid (1') abutment will therefore allow a dental technician to achieve almost any required combination. Nonetheless, the main drawback is the amount of excess material that needs to be extracted, which prolongs and complicates the machining process.

The inventors of this application have designed an abutment (1) still allowing any required combination of orientation and angulation to be obtained, while greatly reducing the amount of excess material that has to be extracted. This amounts to a reduction of around 60%. To this end, and referring specifically to figures 5a, 5b and 5c, these show an abutment (1) that has a cylindrical portion (2) whose axis is the main axis (E) and which is provided at its lower end with a hexagonal-shaped connecting (3) orifice so it can be affixed to the implant (not shown). This abutment (1) further comprises a substantially conical machinable portion (4) but which only covers one sector of the circumference. In particular, the machinable (4) conical portion is limited by two planes (P) running parallel to the main axis (E) and tangential to the cylindrical portion (2).

In the example in figure 5, where the connecting (3) orifice has a hexagonal shape, it is necessary to ensure that possible orientation positions cover the 60° angle between one coupling position and another in respect of the hexagonal (3) orifice and the implant. To this end, the angle formed by the planes (P) that limit the machinable conical (4) portion is substantially 60°.

In figure 5a the axes corresponding to the highest degree of orientations that a potential stump could adopt, obtained by machining this machinable portion (4), are shown. Note that the distance between these axes and planes (P) delimiting the machinable portion (4) correspond to the thickness of a stump. In short, a stump may be machined in any possible orientation between the two end axes shown. In figure 5c some examples of orientations are shown, although it is important to understand that a specific finite number would not be set, but rather any orientation would be possible.

In respect of angulation, it can be seen in figure 5b that the opening angle of the conical portion (4) is about 30°. Thus, when the conical portion (4) is properly machined, any angle between 0° and 30° can be obtained.

In the example in figure 6, the conical portion (4) has an even smaller volume, thus requiring even less material to be extracted than in the example in figure 5. Specifically, the connecting (3) orifice has twelve sides and therefore it is sufficient for the machinable portion (4) to obtain a stump within a 30° orientation range. In this case, the planes (P) delimiting the machinable portion (4) are practically parallel, as shown. In addition, figure 6b shows how it is possible to choose any value between 0° and 30° for the angle.

In short, an abutment (1) allowing any desired angulation and orientation to be achieved is obtained but in a far shorter machining time, the common mechanical means in any prosthetic workshop being sufficient. Other advantages which may be mentioned are the following:
- It is all-metal.
- It is a single piece.
- There is no need for any tool or special key for manufacturing or assembly.
- There is no need for computer applications for individual customisation.
- There is no need for "casting", in relation to casting or smelting metals.

## Claims

1. Angled prosthetic (1) abutment, wherein it comprises:
- a cylindrical portion (2) arranged according to a main axis (E) of the abutment (1), which has a connecting means (3) at its lower end, which is suitable for affixing to a dental implant and
- a machinable portion (4) with a substantially conical sector cut by two planes (P) running parallel to the main axis (E) and substantially tangential to the cylindrical portion (2).

2. Abutment (1) according to claim 1, wherein the opening angle of the conical (4) machinable portion relative to the main axis (E) is substantially 30°.

3. Abutment (1) according to any of the preceding claims, wherein the connecting means (3) has a hexagonal shape.

4. Abutment (1) according to claim 3, wherein the angle formed by the two planes (P) is substantially 60°.

5. Abutment (1) according to any of the claims 1-2, wherein the connecting means (3) has twelve sides.

6. Abutment (1) according to any of the preceding claims, which is made of titanium, chromium, nickel, cobalt, gold, zirconium or alloys comprising one of the aforementioned elements.
